# EUROPEAN PATENT APPLICATION

(11) **EP 1 056 220 A2**
(43) Date of publication of application: **29.11.2000**
(21) Application number: 00110897.6
(22) Date of filing: 23.05.2000
(51) Int. Cl.: H04B 7/08, H04M 1/02

(54) **Mobile communication terminal**

(30) Priority: 25.05.1999 JP 14533799
(71) Applicant: MATSUSHITA ELECTRIC INDUSTRIAL CO., LTD., Kadoma-shi, Osaka (JP)
(72) Inventor: Aihara, Yasuo, Sendai-shi, Miyagi 989-3202 (JP); Takahashi, Kenichi, Kawasaki-shi, Kanagawa 214-0036 (JP)
(74) Representative: Grünecker, Kinkeldey, Stockmair & Schwanhäusser Anwaltssozietät

(57) **Abstract**

Since a flip part for protecting an operation surface is provided, with a patch antenna provided on the front surface of the flip part, in the case the device is disposed laterally on a desk with the operation surface upward, the patch antenna is oriented vertically (zenith direction), and thus the optimum antenna directivity can be provided with respect to the counterpart of the electric wave transmission and receipt so as to ensure the stable electric field strength.

## Description

### BACKGROUND OF THE INVENTION

The present invention relates to a mobile communication terminal such as a mobile terminal device for satellite communication. More specifically, it relates to a mobile communication terminal capable of maintaining the optimum directivity of an antenna with respect to the counterpart of the electric wave transmission and receipt, such as a satellite station, for providing a stable electric field strength even in the case of waiting in the state laterally disposed with the operation surface of the device upward (laid state) on a desk.

As a mobile communication terminal such as a mobile terminal device for satellite communication, those having a substantially rectangular parallelepiped housing (device main body) shape, with a helical antenna or a patch antenna fixed on the upper end part in the longitudinal direction have been used commonly. Therefore, in the case of placing the device on a desk while waiting, it is necessary to dispose the device in the upright state for orienting the antenna in the vertical direction (zenith direction) for the sake of the antenna directivity. Moreover, in the case of a device comprising a helical antenna or a patch antenna movable from the terminal device longitudinal direction, the antenna orientation needs to be changed manually to the vertical direction (zenith direction) according to the device placement orientation. As a placement method of such a mobile terminal device for satellite communication, one disclosed in JP-A-9-294286 is known.

However, according to the conventional mobile terminal device for satellite communication, in the case of disposing the device on a desk laterally with the operation surface upward while waiting, since the helical antenna or the patch antenna fixed on the conventional terminal device in the longitudinal direction is oriented in the horizontal direction (earth direction) so that the antenna directivity is weak in the terminal device lower part, it is difficult to obtain a sufficient received electric field with respect to the electric wave coming from the terminal device lower part direction. Moreover, in the case of the terminal device comprising the helical antenna or the patch antenna movable from the terminal device longitudinal direction, a problem is involved in that the antenna orientation needs to be changed manually according to the terminal placement orientation.

### SUMMARY OF THE INVENTION

In order to solve the problems, an object of the invention is to provide the excellent mobile communication terminal capable of obtaining a stable electric field strength with respect to the counterpart of the electric wave transmission and receipt, regardless of its longitudinal or lateral placement orientation.

In order to solve the conventional problems, the invention is a mobile communication terminal comprising a main body antenna on the upper end part of a main body, wherein a flip part for protecting an operation surface is provided, with a patch antenna provided on the front surface of the flip part. According to the configuration, even if the device is disposed laterally on a desk with the operation surface upward while waiting, the optimum antenna directivity can be provided with respect to the counterpart of the electric wave transmission and receipt so as to ensure a stable electric field strength.

Moreover, the diversity reception is executed with the patch antenna provided on the flip part and the main body antenna during the receipt and the conversation regardless of the detection result by the stored tilt detecting device. According to the configuration, a stable electric field strength can be ensured also with respect to change of the mobile communication terminal orientation during use.

Furthermore, the placement orientation of the terminal device is detected by a tilt detecting device stored in the mobile communication terminal while waiting, for selecting the antenna having the optimum directivity with respect to the counterpart of the electric wave transmission and receipt. According to the configuration, a stable receiving electric field can be ensured.

Moreover, a low noise amplifier is stored in the flip part. According to the configuration, the loss between the low noise amplifier and the patch antenna provided in the flip part can be restrained to the minimum level.

Since a first aspect of the invention is a mobile communication terminal comprising a main body antenna on the upper end part of a main body, wherein a flip part for protecting an operation surface is provided, with a patch antenna provided on the front surface of the flip part, in the case the device is disposed laterally on a desk with the operation surface upward, the patch antenna provided on the front surface is oriented vertically (zenith direction), and thus the effect of providing the optimum antenna directivity with respect to the counterpart of the electric wave transmission and receipt so as to ensure the stable electric field strength can be achieved.

Since a second aspect of the invention is themobile communication terminal according to the first aspect, wherein a patch antenna is provided further on the rear surface of the flip part, the patch antenna provided on the rear surface of the flip part is oriented vertically (zenith direction) during use with the flip part opened, and thus the effect of providing the optimum antenna directivity with respect to the counterpart of the electric wave transmission and receipt so as to ensure the stable electric field strength can be achieved.

Since a third aspect of the invention is the mobile communication terminal according to the second aspect, wherein the patch antennas on both front and rear surfaces of the flip part are selected by an antenna switching device stored in the flip part so as to execute the diversity reception, the effect of executing the diversity reception between the patch antennas provided on both front and rear surfaces of the flip part can be achieved.

Since a fourth aspect of the invention is the mobile communication terminal according to the first aspect, wherein the diversity reception is executed with the patch antenna provided on the front surface of the flip part and the main body antenna, the effect of selecting the antenna capable of ensuring the stable electric field strength also with respect to change of the mobile communication terminal orientation can be achieved.

Since a fifth aspect of the invention is the mobile communication terminal according to the second aspect, wherein the diversity reception is executed with the patch antenna provided on the front surface of the flip part and the main body antenna, or with the patch antenna provided on the rear surface of the flip part and the main body antenna, the effect of selecting the antenna capable of ensuring the stable electric field strength also with respect to change of the mobile communication terminal orientation can be achieved.

Since a sixth aspect of the invention is the mobile communication terminal according to the first or second aspect, wherein the orientation of the main body is detected by a tilt detecting device stored in the main body for selecting the antenna having the optimum antenna directivity with respect to the counterpart of the electric wave transmission and receipt, the effect of selecting the antenna having the optimum antenna directivity with respect to the counterpart of the electric wave transmission and receipt can be achieved.

Since a seventh aspect of the invention is the mobile communication terminal according to the first aspect, wherein the diversity reception is executed with the patch antenna provided on the front surface of the flip part and the main body antenna during the receipt and the conversation regardless of the detection result by the tilt detecting device stored in the main body, the effect of ensuring the stable electric field strength also with respect to change of the mobile communication terminal orientation can be achieved.

Since an eighth aspect of the invention is the mobile communication device according to the second aspect, wherein the diversity reception is executed with the patch antennas provided on both surfaces of the flip part and the main body antenna during the receipt and the conversation regardless of the detection result by the tilt detecting device stored in the main body, the effect of ensuring the stable electric field strength also with respect to change of the mobile communication terminal orientation can be achieved.

Since a ninth aspect of the invention is the mobile communication terminal according to the second aspect, wherein whether the flip part is opened or closed is detected by an opening/closure detecting device stored in a joint part of the flip part and the main body for switching the patch antennas provided on both sides of the flip part, the effect of selecting the patch antenna provided on the flip front surface in the case the flip is closed, and selecting the patch antenna provided on the flip rear surface in the case the flip is opened can be achieved.

Since a tenth aspect of the invention is the mobile communication terminal according to the first or second aspect, wherein a low noise amplifier is stored in the flip part, the effect of restraining the loss between the low noise amplifier and the patch antenna provided in the flip part to the minimum level can be achieved.

### BRIEF DESCRIPTION OF THE DRAWINGS

FIG. 1 is a perspective view of a portable terminal device adopted with the invention in the state with a flip closed.
FIG. 2 is a perspective view of the portable terminal device adopted with the invention in the state with the flip opened.
FIG. 3 is a diagram showing an example of the directivity of the main body antenna shown in FIG. 1.
FIG. 4 is a diagram showing the state with the portable terminal device of FIG. 1 disposed laterally on a table with the operation surface upward.
FIG. 5 is a block diagram showing the principal part configuration of an electric system of the portable terminal device shown in FIG. 1.
FIGS. 6A and 6B are diagrams for explaining the specific configuration and operation of the tilt detecting device of FIG. 5.
FIG. 7 is a flow chart showing the antenna switching selecting operation of the electric system shown in FIG. 5.

### DETAILED DESCRIPTION OF THE PREFERRED EMBODIMENTS

Hereinafter an embodiment of the invention will be explained in detail with reference to the drawings.

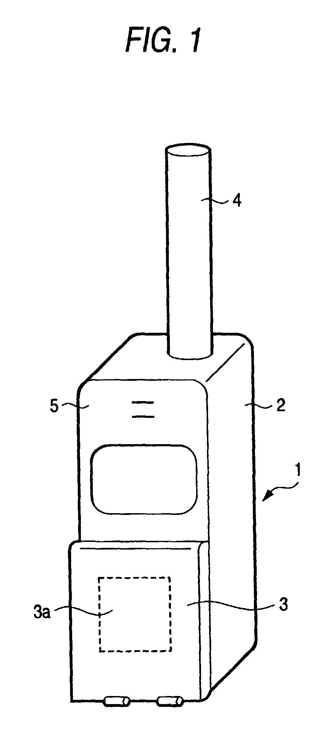

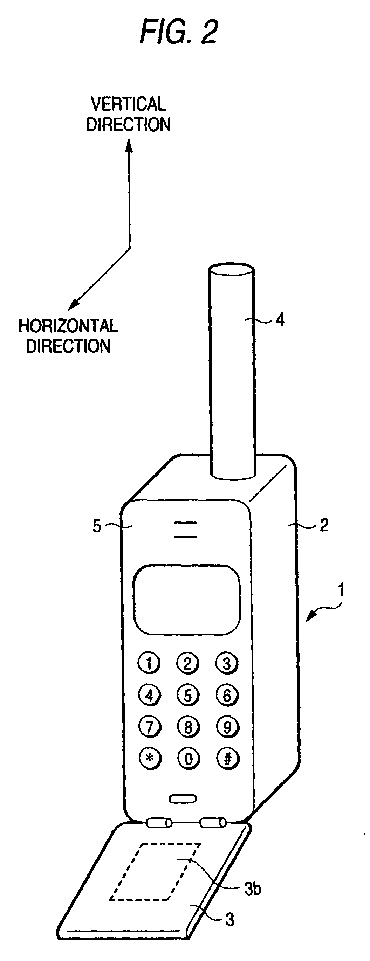

FIGS. 1 and 2 are perspective views of the external appearance of a mobile terminal for satellite communication adopted with the invention. FIG. 1 shows the state with the flip closed in the mobile terminal for satellite communication, and FIG. 2 shows the state with the flip opened.

The mobile terminal device for satellite communication (hereinafter abbreviated as the mobile terminal device) 1 comprises an operation surface 5 at the front surface of a main body 2 formed in a substantially rectangular parallelepiped shape. The operation surface 5 includes a speaker, a display part, and various kinds of keys provided from the upper part to the lower part thereof. A flip 3 is provided on the lower part of the front surface of the main body 2. Furthermore, a bar-like main body antenna 4 is fixed on the upper end face of the main body 2.

The flip 3 is formed in a substantially rectangular plate-like shape, to be opened or closed by swaying around the joint part on the lower end thereof. When the mobile terminal 1 is not in use, the flip 3 is placed in the closed state as shown in FIG. 1 for covering and protecting the various kinds of the keys provided below the operation surface 5. In contrast, when the mobile terminal device 1 is in use, the flip 3 is rotated to the forward front surface direction by about 90 degrees so as to be in the opened state as shown in FIG. 2 for exposing the various kinds of the keys for allowing the operation thereof. Moreover, a front surface patch antenna 3a is provided on the front surface of the flip 3, and a rear surface patch antenna 3b is provided on the rear surface.

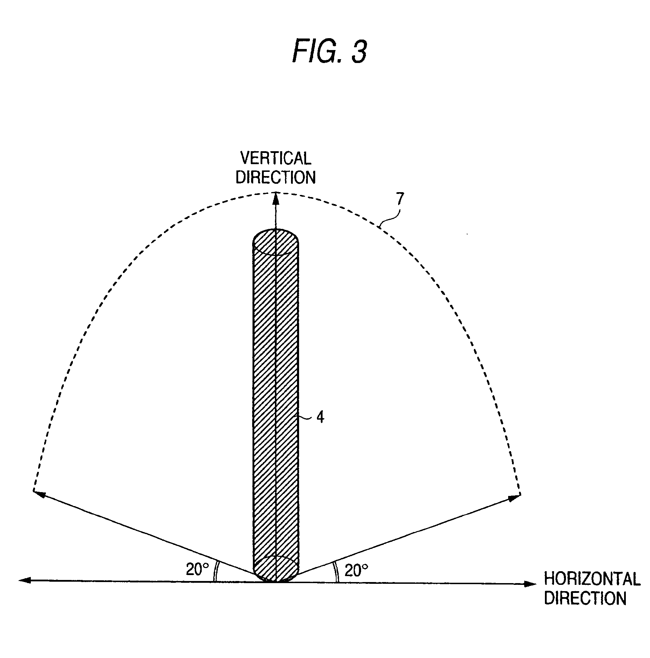

FIG. 3 is a diagram showing an example of the directivity of the main body antenna 4. The main body antenna 4 has a directivity 7 in the range of a 20 degrees or more elevation angle from the horizontal direction (earth direction). Accordingly, interference by the electric wave coming from the horizontal direction (earth direction) can be avoided.

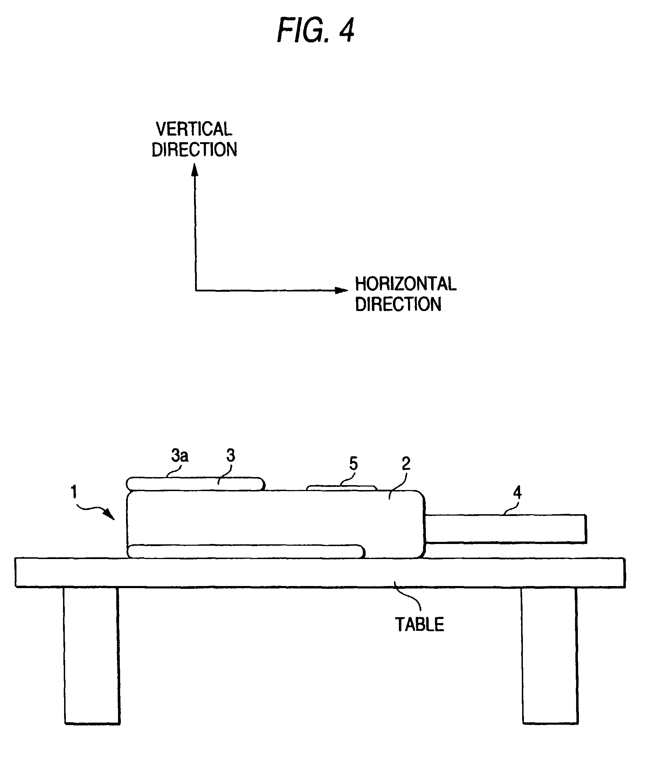

Schematic operation of the mobile communication terminal 1 with the above-mentioned configuration will be explained. As shown in FIG. 4, in the case of waiting with the device disposed laterally on a table with the operation surface 5 upward, the main body antenna 4 is oriented to the horizontal direction (earth direction) so as to be interfered by the electric wave coming from the horizontal direction (earth direction) as well as the directivity is weakened with respect to the electric wave coming from the direction of the lower part of the mobile terminal 1. However, since the front surface patch antenna 3a provided on the front surface of the flip 3 is oriented to the vertical direction (zenith direction), the optimum directivity can be achieved with respect to the satellite station. Moreover, since the device is used with the flip 3 opened during conversation as shown in FIG. 2, the rear surface patch antenna 3b provided on the rear surface of the flip 3 and the main body antenna 4 are both oriented to the vertical direction (zenith direction), and thus the optimum directivity can be achieved with respect to the satellite station.

Accordingly, since the mobile terminal 1 according to the embodiment of the invention comprises a patch antenna on the front surface of the flip 3, even in the case of waiting with the device disposed laterally on a table with the operation surface 5 upward, the optimum antenna directivity can be maintained with respect to the satellite station so as to ensure the stable electric field strength. Moreover, since the flip 3 can be opened by rotating around the axis parallel to the right and left direction of the operation surface 5 when the mobile terminal 1 is in use, the various kinds of the keys can be exposed so as to enable the operation thereof as well as the rear surface of the flip 3 can be oriented to the vertical direction (zenith direction) so as to provide the optimum directivity to the main body antenna 4 and the rear surface patch antenna 3b with respect to the satellite station.

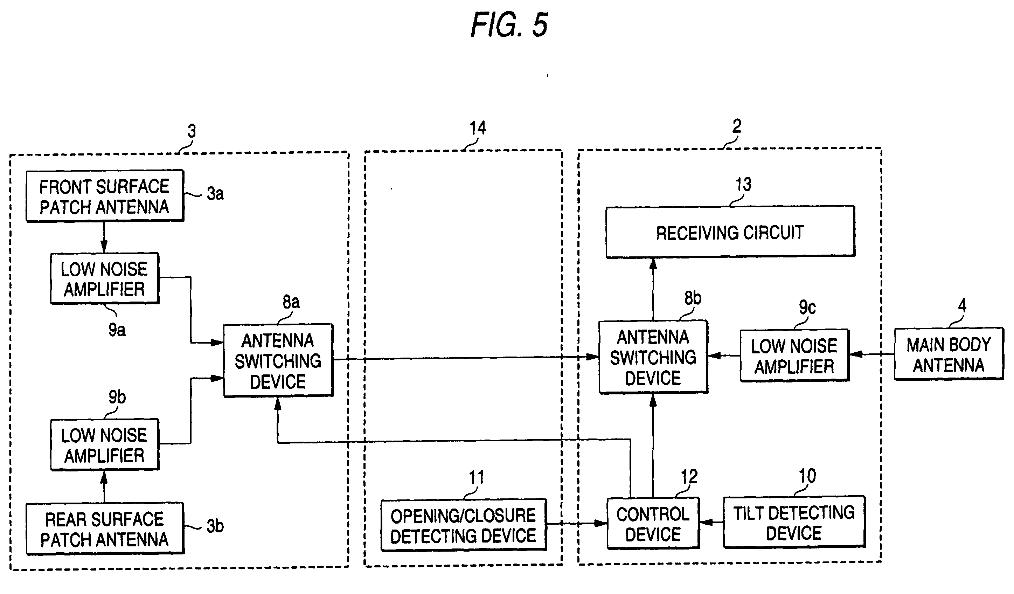

Next, the configuration and operation of the electric system inside the mobile terminal 1 will be explained. FIG. 5 is a block diagram showing the principal configuration of the electric system of the mobile terminal 1. A low noise amplifier 9c provided in the main body 2 amplifies a signal received by the main body antenna 4 and outputs the same to an antenna switching device 8b comprising a diode switch. In contrast, a low noise amplifier 9a provided in the flip 3 amplifies a signal received by the front surface patch antenna 3a and outputs the same to an antenna switching device 8a comprising a diode switch, and further, a low noise amplifier 9b amplifies a signal received by the rear surface patch antenna 3b and outputs the same to the antenna switching device 8a. Moreover, a tilt detecting device 10 provided in the main body 2 detects the tilt of the main body and outputs the same to a control device 12. An opening/closure detecting device 11 comprising a lead switch provided in the joint part 14 between the main body 2 and the flip part 3 detects the opening/closing state of the flip part 3 and outputs the same to the control device 12. The control device 12 generates and outputs a switching control signal for the antenna switching devices 8a and 8b based on the output from the tilt detecting device 10 and the opening/closure detecting device 11. The antenna switching device 8a switches and selects the outputs from the low noise amplifiers 9a and 9b according to the switching control signal from the control device 12 and outputs the same. Moreover, the antenna switching device 8b switches and selects the output from the low noise amplifier 9c and the output from the antenna switching device 8a according to the switching control signal from the control circuit 12 and outputs the same. A receiving circuit 13 receives the output from the antenna switching device 8b.

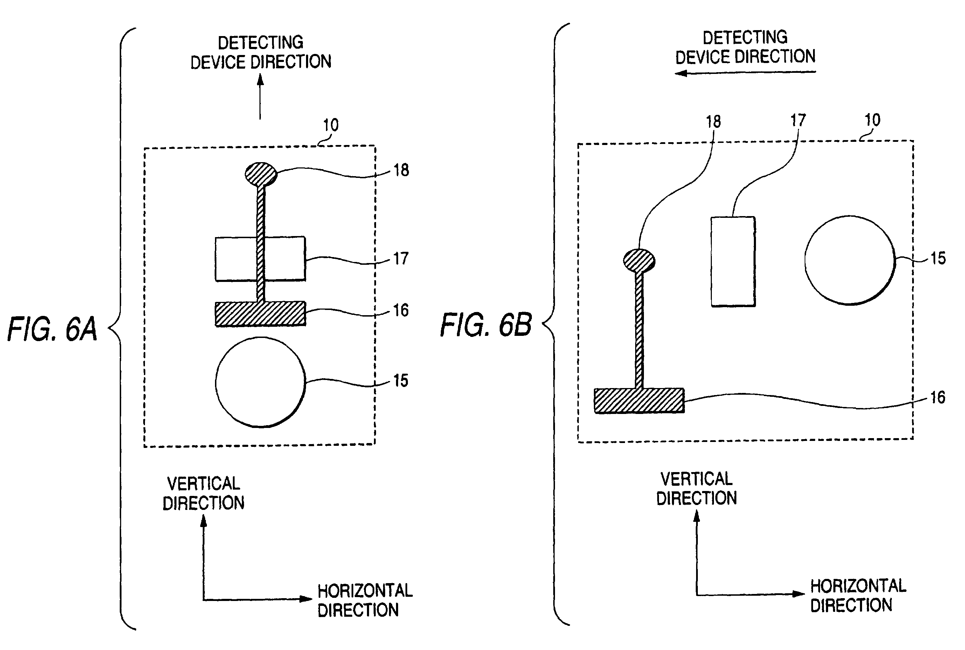

With reference to FIGS. 6A and 6B, the specific configuration and operation of the tilt detecting device 10 will be explained. The tilt detecting device 10 fixed on the main body 2, comprises a lead switch 15, a metal plate 16 supported by a fulcrum 18, and a magnet 17. The orientation of the lead switch 15 and the magnet 17 is changed according to the tilt of the tilt detecting device 10, but the metal plate 16 supported by the fulcrum 18 is provided such that the fulcrum 18 is always oriented to the vertical direction (zenith direction)

In the tilt detecting device with the configuration, when the tilt detecting device 10 is oriented to the vertical direction (zenith direction) as shown in FIG. 6A, since the metal plate 16 supported by the fulcrum 18 blocks the magnetic field of the magnet 17, the lead switch 15 is turned off. In contrast, when the tilt detecting device is oriented to the horizontal direction (earth direction) as shown in FIG. 6B, since the lead switch 15 and the magnet 17 are rotated by 90 degrees with the tilt detecting device, the metal plate 16 supported by the fulcrum 18 does not block the magnetic field of the magnet 17 so that the lead switch 15 is turned on. Therefore, according to the on/off state of the lead switch 15, the tilt of the main body 2 can be detected.

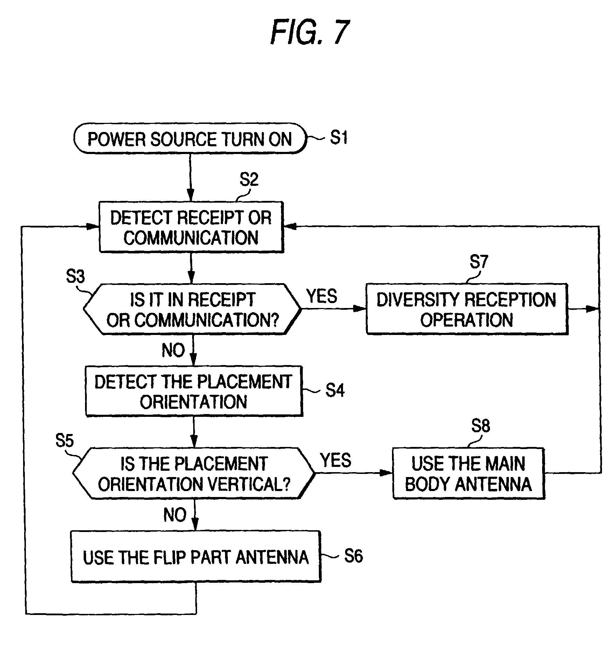

Next, with reference to a flow chart of FIG. 7, the antenna switching select operation of the electric system shown in FIG. 5 will be explained.

First, when the power source of the mobile terminal device 1 is turned on (step S1), whether the device is in the receipt state, the conversation state, or the waiting state is detected (step S2) so as to judge it is in the receipt state, the conversation state, or the waiting state in the step S3. The judgment can be made here for the conversation state or the waiting state such that when the flip 3 is detected to be opened by the opening/closure detecting device 11, it is judged to be in conversation, and when the flip 3 is detected to be closed, it is judged to be waiting.

In the case it is judged to be in receipt or conversation, it proceeds to the step S7 for executing the diversity reception operation by the main body antenna 4 and the rear surface patch antenna 3b provided on the rear surface of the flip 3. In this case, since the device 1 is in the state shown in FIG. 2, the control device 12 controls such that the antenna switching device 8a selects the output from the low noise amplifier 9b, and the antenna switching device 8b switches the output from the antenna switching device 8a and the output from the low noise amplifier 9c.

In the case it is judged not to be in receipt or conversation (while waiting) in the step S3, it proceeds to the step S4 for detecting the placement orientation of the mobile terminal 1 by the tilt detecting device 10 stored in the mobile terminal for satellite communication 1. If the placement orientation of the terminal device 1 is judged to be vertical (in the state shown in FIG. 1) in the step S5, it proceeds to the step S8 for starting the waiting operation by the main body antenna 4. At the time, the control device 12 controls such that the antenna switching device 8b selects the output from the low noise amplifier 9c.

In contrast, if the placement orientation of the terminal device 1 is judged to be horizontal (in the state shown in FIG. 4) in the step S5, it proceeds to the step S6 for starting the waiting operation by the front surface patch antenna 3a provided on the front surface of the flip 3. At the time, the control device 12 controls such that the antenna switching device 8a selects the output from the low noise amplifier 9a, and the antenna switching device 8b selects the output form the antenna switching device 8a.

As heretofore explained, according to the embodiment of the invention, since whether or not the device is in communication is judged so that the diversity reception operation is executed with the main body antenna 4 and the rear surface patch antenna 3b in the case it is judged to be in communication, and the antenna having the directivity to the vertical direction (zenith direction) is selected according to the device placement orientation in the case it is judged to be waiting, the antenna directivity can always be maintained in the optimum state with respect to the satellite station so as to ensure the stable electric field strength regardless of the orientation of the device in receipt, conversation, or waiting. Moreover, since the low noise amplifiers 9a, 9b are stored in the flip 3, the transmission loss between the patch antennas 3a, 3b and the low noise amplifiers 9a, 9b can be restrained at the minimum level so that deterioration of the receiver sensitivity can be restrained at the minimum level.

In the terminal device 1 heretofore explained, it is also possible to execute the diversity reception between the front surface patch antenna 3a and the rear surface patch antenna 3b in receipt or conversation. Moreover, it is also possible to switch and select the front surface patch antenna 3a and the rear surface patch antenna 3b by detecting the opening/closing state of the flip 3 by the output from the opening/closure detecting device 11. Furthermore, even if the patch antenna is provided only on the front surface of the flip 3, the optimum antenna directivity can be maintained with respect to the satellite state at the time of waiting in the state with the device disposed laterally with the operation surface upward so as to ensure the stable electric strength. Moreover, although the flip 3 is provided in the embodiment such that it can open or close by swaying around the axis parallel to the operation surface provided on the lower end of the main body 2, the flip 3 can be provided in any manner as long as the rear surface thereof can be oriented upward with respect to the main body 2 when it is opened.

Accordingly, since a patch antenna is provided on the front surface of a flip part for protecting an operation surface in the invention, even if the device is disposed laterally on a desk with the operation surface upward while waiting, the optimum antenna directivity can be provided with respect to the counterpart of the electric wave transmission and receipt, and thus the effect of ensuring a stable electric field strength can be achieved.

Moreover, since the diversity reception is executed with the patch antenna provided on the flip part and the main body antenna during the receipt and the conversation regardless of the detection result by the stored tilt detecting device, the effect of ensuring a stable electric field strength also with respect to change of the orientation during use can be achieved.

Furthermore, since the placement orientation of the terminal device is detected by the stored tilt detecting device while waiting, for selecting the antenna having the optimum directivity with respect to the counterpart of the electric wave transmission and receipt, the effect of ensuring a stable receiving electric field can be achieved.

Moreover, since a low noise amplifier is stored in the flip part, the effect of restraining the loss between the low noise amplifier and the patch antenna provided in the flip part to the minimum level can be achieved.

## Claims

1. A mobile communication terminal comprising:
a main body antenna on the upper end part of a main body;
a flip part for protecting an operation surface; and
a first patch antenna provided on the front surface of the flip part.

2. The mobile communication terminal according to claim 1, further comprising a second patch antenna provided on the rear surface of the flip part.

3. The mobile communication terminal according to claim 2, further comprising at least one of antenna switching device stored in the flip part, wherein the antenna switching device and selects one of the first patch antenna and the second patch antenna so as to execute the diversity reception.

4. The mobile communication terminal according to claim 1, wherein the diversity reception is executed with the first patch antenna and the main body antenna.

5. The mobile communication terminal according to claim 2, wherein the diversity reception is executed with the main body antenna and the first patch antenna, and the main body antenna and the second patch antenna.

6. The mobile communication terminal according to claim 1, further comprising a tilt detecting device stored in the main body, wherein the tilt detecting device detects the orientation of the main body for selecting the antenna having the optimum antenna directivity with respect to the counterpart of the electric wave transmission and receipt.

7. The mobile communication terminal according to claim 2, further comprising a tilt detecting device stored in the main body, wherein the tilt detecting device detects the orientation of the main body for selecting the antenna having the optimum antenna directivity with respect to the counterpart of the electric wave transmission and receipt.

8. The mobile communication terminal according to claim 1, wherein the diversity reception is executed with the first patch antenna and the main body antenna during the receipt and the conversation regardless of the detection result by the tilt detecting device stored in the main body.

9. The mobile communication terminal according to claim 2, wherein the diversity reception is executed with the second patch antenna and the main body antenna during the receipt and the conversation regardless of the detection result by the tilt detecting device.

10. The mobile communication terminal according to claim 2, further comprising:
a joint part which joints the main body and flip portion; and
an opening/closure detecting device stored in the joint part,
wherein the opening/closure detecting device detects the opening/closure state of the flip part for switching the first patch antenna and the second patch antenna.

11. The mobile communication terminal according to claim 1, further comprising a low noise amplifier stored in the flip part.
